# EUROPEAN PATENT SPECIFICATION

(11) **EP 0 398 580 B1**
(45) Date of publication and mention of the grant of the patent: **28.09.1994**
(21) Application number: 90305002.9
(22) Date of filing: 09.05.1990
(51) Int. Cl.: B24D 11/00, B24D 3/34, B24D 3/00

(54) **Abrasive article with conductive, doped, conjugated, polymer, supersize coat and method of making same**
Gebundenes Schleifmittel mit einer Überzugsschicht aus leitfähigem, "doped", konjugiertem Polymer und Verfahren zu dessen Herstellung
Article abrasif avec couche de surencollage constituée d'un polymère conducteur, dopé, conjugué et son procédé d'obtention

(30) Priority: 15.05.1989 US 352734
(43) Date of publication of application: 22.11.1990
(73) Proprietor: MINNESOTA MINING AND MANUFACTURING COMPANY, St. Paul, Minnesota 55133-3427 (US)
(72) Inventor: Harmer, Walter L., c/o Minnesota Mining and, St. Paul Minnesota 55133-3427 (US); Christensen, Leif, c/o Minnesota Mining and, St. Paul Minnesota 55133-3427 (US); Drtina, Gary J., c/o Minnesota Mining and, St. Paul Minnesota 55133-3427 (US); Helmin, Harvey, J. c/o Minnesota Mining and, St. Paul Minnesota 55133-3427 (US)
(74) Representative: Baillie, Iain Cameron

(56) References cited:
- EP-A- 0 071 723
- DE-A- 2 430 336
- GB-A- 1 041 430
- GB-A- 1 058 643
- US-A- 3 619 150
- US-A- 3 806 956
- US-A- 3 942 959
- US-A- 3 997 302
- US-A- 4 696 835

## Description

This invention pertains to loading-resistant abrasive products such as coated abrasive products and a method of making the same.

An abrasive article corresponding to the preamble of claim 1 is known, for example, from DE-A-2430366.

Coated abrasives, considered the premier tool for abrading and finishing wood and wood-like materials, unfortunately suffer from two major problems associated with their use, loading and static electricity. Loading is the term used to describe the filling of the spaces between abrasive granules with swarf (the material removed from the workpiece) and the subsequent build-up of that material. In wood sanding, sawdust particles are lodged in between abrasive grains, dramatically reducing the cutting ability of the grains and often resulting in burning of the surface of the wood workpiece. Burning, of course, severely damages the workpiece.

A major cause of loading is the build-up of an unwanted electrical charge during belt sanding. This electrical charge or static electricity is generated by the constant interaction of the endless coated abrasive belt, the wood workpiece and the back support for the endless belt. This static charge is typically on the order of 50 to 100 kilovolts.

Static electricity is also responsible for numerous other problems. A sudden discharge of the accumulated static charge can cause serious injury to an operator and ignition of dust particles, thereby posing a serious threat of fire or explosion. The static charge also causes the sawdust to cling to various surfaces including that of the coated abrasive and the wood workpiece thereby making it difficult to remove by use of a conventional exhaust system.

If the electrical charge is reduced or eliminated, the coated abrasive will have a significantly longer use life, produce a finer surface finish on the workpiece and eliminate or reduce the potential for the above-mentioned hazards.

Many solutions, with varying degrees of success, have been attempted to solve the loading and static electricity problems. One solution is to apply a size or supersize coat of low energy surface material onto the abrasive surface. U.S. Patent No. 2,768,886 (Twombly) discloses the use of an unfused surface coating of a metal soap such as a metal stearate or palmitate on a coated abrasive to reduce the loading. U.S. Patent No. 2,881,064 (Rankin et al) discloses the use of an organo silicon based supersize coating to prevent loading. U.S. Patent No. 3,042,508 (Hagis et al) discloses a metal backed-abrader having a superposed coating of fluoroethylene polymer to reduce loading. U.S. Patent No, 3,043,673 (Klein et al) teaches the use of an oxy-containing compound selected from aliphatic polyhydric alcohols or aliphatic polyethers blended into the phenolic based size resin. U.S. Patent No. 3,795,496 (Greenwood) describes a coated abrasive containing plasticized polyvinyl acetate supersize coating to prevent loading. U.S. Patent No. 4,396,403 (Ibrahim) describes a loading resistant coated abrasive made without the need of a supersize coat having a size coat comprised of a mixture of phosphoric acids, partial esters of such acids, amine salts of such acids and partial esters, and/or quarternary ammonium salts with at least one long substituent group and amino resins or glue sizing resin.

Another solution to the loading problem is to incorporate a conductive or an antistatic material into the coated abrasive construction to eliminate the accumulation of electrical charge. U.S. Patent No. 3,942,959 (Markoo et al) discloses a coated abrasive construction having an inner conductive layer which has been made conductive by the addition of conductive filler sandwiched between two nonconductive resin layers to prevent the accumulation of electrostatic charge during grinding. The conductive filler may be a metal alloy, metal pigment, metal salt or metal complex. U.S. Patent No. 3,992,178 (Markoo et al) teaches a coated abrasive containing an outer layer containing graphite particles in a bonding resin which reduces the electrostatic charges generated during grinding.

Although the above references may produce coated abrasive products which have a lessened tendency to load, there is still considerable room for improvement.

This invention provides a coated abrasive product which contains a supersize coating of a conductive, doped, conjugated polymer to reduce the static electrical charge resulting from abrading operations. A "supersize coating" as herein used means a coating immediately over the resin size coat of the abrasive face of the coated abrasive product. The supersize coating may be the top coating or outer coating of the coated abrasive product but it is preferably immediately beneath the top coating or outer coating with the top coating being a "free coating". The free coating can be of any binder-like material which serves to protect the conductive, doped, conjugated polymer. Examples of such binder-like materials include: urea-formaldehyde resins, melamine-formaldehyde resins, phenolic resins, epoxy resins and metal stearates.

The reduced charge build-up is manifested by a decreased tendency of the abrasive product of the invention to load with particles generated from abrading operations, a reduction in the static electricity generated from abrading operations and an increased cut rate.

More specifically, the present invention provides an improved abrasive article comprising:
(a) a support member;
(b) abrasive granules;
(c) a bond system which serves to secure the abrasive granules to the support member in an abrasive coating which has an exposed abrasive surface;
the improvement comprising a conductive, doped, conjugated polymer layer over the abrasive surface in an amount sufficient to reduce static electrical charge resulting from abrading operations so as to endow the abrasive article with improved anti-loading properties.

The preferred conjugated polymers are polypyrrole and polyaniline or substituted versions thereof. The preferred dopants for polypyrrole are p-toluene sulfonate, chloride ion, or ferric tetrachloride. The preferred dopant for polyaniline is sulfate or chloride ion.

The conductive, doped, conjugated polymer is employed as a supersize coating, preferably at a coating thickness of less than about 0.05 millimeter. It is also contemplated to have multiple coatings of the same or different conductive conjugated polymers. It has been found that such a thin coating quite unexpectedly significantly reduces static electricity build up throughout the entire useful life of the coated abrasive product. By contrast, previous anti-loading coatings were required to be much thicker.

Most organic polymers are not considered conductive since they lack charge carriers which are necessary to transport electrons. Most organic conjugated polymers are similarly considered to be insulators; however, certain conjugated polymers can be rendered electrically conductive through the process of redox doping. A conjugated polymer is defined as an organic material having alternating double and single bonds. For example, polyacetylene (which can be obtained by polymerizing acetylene) is comprised of conjugated ethylene units. A conjugated polymer can also include heteroatoms as in poly(p-phenylene sulfide) where a "lone pair" of electrons on the sulfur atom assures uninterrupted conjugation.

Examples of conjugated polymers useful in the practice of the present invention include polythiopene, polyaniline, polypyrrole, polyacetylene, poly(p-phenylene), poly(p-phenylenevinylene), poly(p-phenylene sulfide), polyfuran, polycarbazole, polyisothianaphthene, polyisoindole, polyquinoline, polyazulene, copolymers, mixtures or substituted versions thereof and crosslinked versions thereof.

The process of redox doping involves reduction or oxidation of the conjugated polymer, generating charged sites along the polymer backbone in the form of ion radicals, ions or diions. Often such charged sites, or carriers, are also known by those skilled in the art as "solitons", "polarons", or "bipolarons". The charged carriers are neutralized by the incorporation into the polymer network of counterions called dopants. A polymer which undergoes this transformation is referred to as a "doped" polymer. It is speculated that the electronic conductivity in a doped polymer is due to the movement of the charged carriers along the polymer backbone, and to interchain hopping of charges. The counterions, or dopants, merely serve to maintain electrical neutrality, and have limited mobility within the polymer matrix.

The conductivity of the polymer is a function of the dopant selected, the dopant concentration, molecular weight of the polymer, polydispersity of the polymer, any polymer chain branching, polymer crystallinity and morphology, and polymer processing. Knowledge of the actual degree of conductivity of the conjugated polymer is relatively unimportant as long as it is able to reduce the static electrical charge build-up in the coated abrasive of the invention. A further understanding of the theory of conjugated, doped polymers may be found by referring to the Handbook of Conducting Polymers, Vol. I and II, Skotheim ed., Marcel Dekker, 1986. The mechanism by which the polymer is rendered conductive is unimportant to the practice of the present invention.

The redox agents used in the doping process can vary within wide limits. Generally, the agents must show low nucleophilic or electrophilic reactivities, and be of sufficient redox power to reduce or oxidize the neutral polymer, thus rendering it electronically conductive.

Three types of doping are possible: p, n and self. In p type doping, the dopant is anionic and stabilizes a positive charge generated on the polymer backbone. Examples of redox agents useful in p type doping include salts of a strong cationic oxidant in combination with a non nucleophilic anion. The strong cationic oxidant can include, but is not limited to, Fe(III), Cu(II), Ce(IV), Cr(VI), Co(III), Ag(II), NO⁺ and trityl. The anion in combination with the cationic oxidant can include, but is not limited to, sulfate, bisulfate, perchlorate, fluoroborate, hexafluorophosphate, organic sulfonates, and halides. Other examples of redox agents useful in p type doping include halogens, arsenic pentafluoride, antimony pentafluoride, iodine pentafluoride, persulfate ion in combination with a suitable cation or hydrogen peroxide in combination with a strong acid. In n type doping, the dopant is cationic and stabilizes a negative charge generated on the polymer backbone. In both the p and n type doping, the dopant ion is not very mobile within the polymer. Examples of redox agents useful in n type doping include alkali metals, carbanions associated with alkali metal cations and alkyllithium compounds. In the self doped case, which can be either n or p type, a non-reactive ion is covalently bound to the conjugated polymer chain and the bound ion serves as the dopant ion. One skilled in the art can determine which redox agents are most suitable with a particular conjugated polymer.

The conductive, doped, conjugated polymer coating of this invention can be formed by several different methods which are detailed below. In one embodiment a preformed, neutral, conjugated polymer coating or film can be exposed to a suitable redox agent thus transforming the polymer into its doped form. For example, a thin coating of polyacetylene, e.g., formed by polymerizing acetylene, will become conductive upon exposure to arsenic pentafluoride.

A conductive polymer which is soluble in its neutral or doped form may be coated from solution onto a coated abrasive surface. Examples of such polymers include poly(3-alkyl thiophenes), and the self-doped poly(3-thiophenebeta- alkylsulfonates).

Some conductive polymers are conveniently formed as a coating, directly in their doped form, via oxidative polymerization of suitable monomers. Examples of monomers that undergo this type of polymerization and doping include pyrrole, thiophene, 2,2′-bithiophene, furan, aniline, isothianaphthene, isoindole and substituted versions and mixtures thereof. This is the preferred embodiment of this invention. The reaction is carried out on the surface of the abrasive article. For convenience the coated abrasive article is spray coated with a solution of the monomer and oxidant, applied in either order. The oxidant employed is often in the form of a metal salt, where the metal cation is in a high oxidation state associated with a non-nucleophilic anion. The non-nucleophilic anion becomes the dopant. Useful metal cations include, but are not limited to, Fe(III), Cu(II), Ce(IV), Cr(VI), Co(III), and Ag(II). Non metallic cations that are strong oxidants, and thus useful in the practice of the present invention, include NO⁺ and trityl. Useful anions in combination with the above cations include, but are not limited to, sulfate, perchlorate, fluoroborate, hexafluorophosphate, hexafluoroantimonate, hexafluoroarsenate, trifluoroacetate, organic sulfonates, and halides such as chloride or fluoride. Halogens are also useful as oxidants. An example of a strong anionic oxidant useful for this invention is persulfate, conveniently employed as the ammonium or alkali-metal salt.

Alternatively, the dopant can be incorporated via the purposeful addition of non-nucleophilic anion to the redox reaction. For example, oxidation of pyrrole with hydrogen peroxide in fluoroboric acid results in the formation of polypyrrole doped with fluoroborate.

A preferred conductive polymer is polypyrrole generated with ferric chloride as a redox agent. Another preferred conductive polymer is polyaniline generated from dilute hydrochloride acid with ammonium persulfate as the redox agent. The aniline polymerizes to chloride or sulfate doped polyaniline thereby becoming conductive. The conductive supersize coating may be formed by coating pyrrole monomer on the abrasive face of a coated abrasive followed by a coating of ferric chloride. The pyrrole polymerizes to ferric tetrachloride or chloride doped polypyrrole thereby becoming conductive. One method of applying a conductive pyrrole polymer layer to a substrate is disclosed in U.S. Patent No. 4,696,835 (Mans et al).

The most preferred method for applying the monomer and the redox agent is to simultaneously spray these components in a converging stream onto the abrasive surface of the coated abrasive. It has been found that this produces quite unexpectedly a conductive, doped, conjugated polymer having a high degree of conductivity, i.e., a much lower surface resistivity. The solutions of the monomer and redox agent may also be sprayed at the same time in separate streams. It is not recommended to first apply the redox agent solution to the coated abrasive surface, remove the solvent and then apply the monomer since this method allows the redox agent to penetrate into the backing. Some redox agents such as ferric chloride can degrade the backing over time. If the redox agent and the monomer are applied at about the same time, redox agent penetration into the backing and backing degradation can be avoided.

It is also preferred to add a wetting agent to the monomer and redox agent formulations for ease of coating. A useful wetting agent is a liquid, halogenated, hydrocarbon surfactant material such as that having the trade identification FC-170 which is commercially available from Minnesota Mining and Manufacturing (3M) Company.

The coated abrasives of the invention are, except for the conductive polymer coating, typically constructed with a substrate backing, abrasive grain, and a bonding system which operates to secure the abrasive grains to the backing. The backing is most commonly coated with a first layer of adhesive, often referred to as a "make coat", and then abrasive grains are applied. The adherence of the resulting adhesive/abrasive composite is then generally solidified or set sufficiently to retain the abrasive grains to the backing, so that a second layer of adhesive, often referred to as a "size coat", can be applied. The size coat further reinforces the coated abrasive product. The conductive, doped, conjugated polymer "supersize coat" is then applied over the solidified size coat. An optional additional overcoating which may contain a grinding aid or other well known additives, can be applied over the conductive supersize coating. Once the final coat is solidified the resulting coated abrasive product can be converted into a variety of convenient forms of various uses, for example sheets, rolls, belts and discs.

The conventional components forming the coated abrasive product of the invention may be selected from those typically used in this art. The backing may be formed of paper, cloth, vulcanized fiber, polymeric film or any other backing material known or which becomes available for this use. The abrasive granules may be any conventional grade utilized in the formation of coated abrasives and may be formed of flint, garnet, aluminum oxide, ceramic aluminum oxide, alumina zirconia, diamond and silicon carbide, etc., or mixtures thereof. The frequency of the abrasive granules on the sheet will also be conventional. The abrasive granule may be oriented or may be applied to the backing without orientation, depending upon the requirements of the particular coated abrasive product. The bond system, which serves to secure the abrasive granules to the backing, may be formed from phenolic resins, epoxy resins, acrylate resins, urea-formaldehyde resins, melamine-formaldehyde resins, glues or mixtures thereof. The bond system may also include other additives well known in the art such as fillers, grinding aids, coupling agents, dyes, wetting agents or surfactants.

It is preferable that another coating (called a free coating) be applied over the conductive, doped, conjugated polymer coat. It is theorized that this additional coating insulates the doped, conjugated polymer which results in enhancing the conductive nature of the conductive, doped, conjugated polymer. Examples of such coatings include a release agent such as a metal stearate, e.g., zinc stearate and calcium stearate, and a resin bond such as urea-formaldehyde, melamine-formaldehyde, phenol-formaldehyde, or epoxy resin.

The coated abrasive product of the invention may also include such other modifications as are known in this art. For example, a back coating such as pressure-sensitive adhesive may be applied to the nonabrasive side of the construction.

It is also contemplated that the conductive, doped, conjugated polymer can be utilized in a non-woven abrasive product. Non-woven abrasive products typically include an open, porous, lofty, polymer filament structure having abrasive granules distributed throughout the structure and adherently bonded therein by an adhesive material. The method of making such non-woven abrasive products is well known.

### Examples

The following non-limiting examples will further illustrate the invention. All parts, percentages and weight ratios described in the examples are by weight unless otherwise stated.

### Testing

The following tests were used in conjunction with the examples:

### Wood Belt Test

The coated abrasive sheet material was converted into 7.6 cm by 356 cm endless belts. The belts were installed on a constant load surface grinder, abrading a cm by 28 cm surface of a fir end grain wood workpiece. The belt traversed at 1000 surface meters per minute at an interface pressure of approximately 23 grams/cm². Six separate boards were sanded for five minutes each. The test endpoint was thirty minutes. The coated abrasive belts were weighed before and after testing. This weight difference corresponds to the amount of loading, that being the amount of wood particles loaded or collected on the coated abrasive surface.

### Surface Resistivity

Prior to abrading, the surface resistivity of the outermost surface of the coated abrasive was measured for each coated abrasive belt. Surface resistivity (the inverse of conductivity) is a measure of conductivity. In general, as the conductivity of the product increases, the loading and the resistivity decrease. The resistivity was measured using an ohmmeter purchased from Fluke, Model 8020B. The ohmmeter probes were placed 1.3 cm apart and 6 to 12 measurements were taken with the average of these being reported.

### Examples 1-7

Examples 1-7 compare the performance of a coated abrasive product having a supersize coating which includes various combinations of ferric chloride and pyrrole to provide a conductive polymer.

### Example 1

A ferric chloride solution was prepared by mixing 10% anhydrous ferric chloride and 90% ethanol. This solution was then applied to a grade P120 Imperial Resin Bond F weight paper backed coated abrasive belt, commercially available from the Minnesota Mining and Manufacturing (3M) Company. A solution (10% pyrrole, 20% toluene and 70% hexane) was sprayed over the dried ferric chloride coating, causing the pyrrole to rapidly polymerize to form a thin, solid coating of a doped conjugated polymer. The weight ratio of the two solutions was 1 to 1 with approximately 8.2 grams/square meter of ferric chloride and pyrrole being added to the coated abrasive. The coated abrasive was then tested for surface resistivity by the Surface Resistivity Test and loading by the Wood Belt Test. The test results can be found in Table 1.

### Example 2

A coated abrasive was prepared and tested in the same manner as Example 1, except the weight ratio of FeCl₃ to pyrrole was 2 to 1 and the coating weight was 9.4 grams/square meter.

### Example 3

A coated abrasive was prepared and tested in the same manner as Example 1, except the ratio of FeC1₃ to pyrrole was 1 to 2 and the coating weight was 9 grams/square meter.

### Example 4

A coated abrasive was prepared and tested in the same manner as Example 1, except the coating weight was 11.3 grams/square meter.

### Example 5

A coated abrasive was prepared and tested in the same manner as Example 1, except that the pyrrole solution was sprayed immediately after the ferric chloride, without first drying the latter. The coating weight was 7.8 grams/square meter.

### Example 6

A coated abrasive was prepared and tested in the same manner as Example 1, except that the ferric chloride solution and the pyrrole solution were sprayed simultaneously in a converging stream. The coating weight was 6.8 grams/square meter.

### Example 7

A coated abrasive was prepared and tested in the same manner as Example 6, except that the coating weight was 9.7 grams/square meter.

**Table I**

| Example | Surface Resistivity (K ohm at 1.3 cm) | Belt Loading (grams) |
|---|---|---|
| Control A¹ | >20,000 | 0.9 |
| Control B² | >20,000 | 0.8 |
| Control C³ | 20-30 | 0.2 |
| 1 | 40-60 | 0.5 |
| 2 | 20-40 | 0.2 |
| 3 | 25-50 | 0.2 |
| 4 | 15-30 | 0.2 |
| 5 | 10-20 | 0.1 |
| 6 | 10-40 | 0.1 |
| 7 | 5-10 | 0.1 |

| | | |
|---|---|---|
| ¹ Control A was a grade 120 Imperial Resin Bond coated abrasive having an F weight paper backing, the coated abrasive being commercially available from the 3M Company, St. Paul, Minnesota. | | |
| ² Control B was a grade P120 Imperial Resin Bond coated abrasive having an open coat and an F weight paper backing, the coated abrasive being commercially available from the 3M Company, St. Paul, Minnesota. | | |
| ³ Control C was a grade P120 Ekamant EKM Antistatex coated abrasive commercially available from Ekamant. This product is considered in the art to be an antistatic coated abrasive product. | | |

It was evident from the above data that coated abrasive Examples 1-7 according to the present invention performed very similarly to the Ekamant EKM Antistatex product. In addition, coated abrasive Examples 1-7 loaded significantly less than the control Imperial coated abrasive.

### Examples 8-9

The coated abrasive made according to the procedure outlined in Examples 8 and 9 illustrate the invention on a cloth-type backing.

### Example 8

A ferric chloride solution was prepared by mixing 10% anhydrous ferric chloride and 90% ethanol. A pyrrole solution was prepared of 10% pyrrole, 20% toluene and 70% hexane. These solutions were sprayed simultaneously in a 1 to 1 weight ratio onto a grade P120 Three-M-ite Resin Bond J weight cloth backed coated abrasive belt commercially available from the 3M Company, St. Paul, MN. The pyrrole polymerized at room temperature forming doped conjugated polymer. Approximately 2.2 grams/square meter of ferric chloride and pyrrole were added to the coated abrasive. After coating, the coated abrasive was subjected to the Surface Resistivity Test and the Wood Belt Test. Test results can be found in Table II.

### Example 9

A coated abrasive was prepared and tested in the same manner as Example 8 except that the coating weight was 3.5 grams/square meter.

**Table II**

| Example | Surface Resistivity (K ohm at 1.3 cm) | Belt Loading (grams) |
|---|---|---|
| Control D⁴ | >20,000 | 1.3 |
| 8 | 2-5 | 0.5 |
| 9 | 2-5 | 0.5 |

| | | |
|---|---|---|
| ⁴ Control D was a grade P120 resin bond J weight cloth backed coated abrasive product commercially available under the tradename Three-M-ite^{R} from the 3M Company, St. Paul, Minnesota. | | |

It was evident from the above data that the addition of the doped polypyrrole coating significantly reduced belt loading.

### Examples 10-11

The coated abrasives made according to the procedure outlined in Examples 10 and 11 demonstrate the invention on a film-type backing.

### Example 10

A coated abrasive was prepared and tested in the same manner as Example 8 except that the ferric chloride and pyrrole solutions were sprayed onto a grade P120 Three-M-ite Resin Bond Open Coat film, Type 5, coated abrasive belt (commercially available from the 3M Company, St. Paul, MN), with a coating weight of 2.3 grams/square meter. The results are listed in Table III.

### Example 11

A coated abrasive was prepared and tested in the same manner as Example 10 except that the coating weight was 5.1 grams/square meter.

**Table III**

| Example | Surface Resistivity (K ohm at 1.3 cm) | Belt Loading (grams) |
|---|---|---|
| Control E⁵ | >20,000 | 0.7 |
| 10 | 5-10 | 0.4 |
| 11 | 5-10 | 0.3 |

| | | |
|---|---|---|
| ⁵ Control E was a grade P120 open coat film backed coated abrasive belt commercially available under the tradename Three-M-ite Resin Bond Type 5 from the 3M Company, St. Paul, Minnesota. | | |

It was concluded from the above data that the conductive, doped, conjugated polymer performed as an antistatic coating on film-backed abrasive products.

### Examples 12-15

Examples 12 through 15 compare different resistivities of various conductive, doped, conjugated polymers measured on the coated abrasive surface.

### Example 12

A ferric chloride solution was prepared by mixing 10% anhydrous ferric chloride and 90% ethanol. Then this solution was applied to a grade 220 Production RN A weight paper backed open coat coated, abrasive product, commercially available from the 3M Company, St. Paul, Minnesota. After drying at ambient room temperature for 0.5 hour, a 10% pyrrole type monomer, 70% hexane and 20% toluene solution was sprayed over the ferric chloride. The pyrrole rapidly polymerized into a thin solid coating of doped, conjugated polymer. The coating weights of the doped, conjugated polymer and surface resistivity measurements can be found in Table IV.

### Example 13

Example 13 was prepared and tested in the same manner as Example 12 except the pyrrole was replaced with N-methyl pyrrole.

### Example 14

Example 14 was prepared and tested in the same manner as Example 12 except the pyrrole was replaced with a 50/50 blend of pyrrole and N-methyl pyrrole.

**Table IV**

| Example | Coating Weight (gms/sq. meter) | Surface Resistivity (K ohm at 1.3 cm) |
|---|---|---|
| Control F⁶ | -- | >20,000 |
| 12 | 4.9 | 20-30 |
| 13 | 3.8 | 2,400-2,800 |
| 14 | 3.3 | 150-250 |

| | | |
|---|---|---|
| ⁶ Control F was a grade 220 A weight paper backed coated abrasive product commercially available under the trade name Production RN from the 3M Company, St. Paul Minnesota. | | |

It was observed from the above data, that polypyrrole was more conductive than poly(N-methyl pyrrole), however poly(N-methyl pyrrole) was still an improvement over the commercially available product without the conductive supersize coating.

### Example 15

A 5% aqueous solution of ammonium persulfate, [(NH₄)₂S₂0₈], a strong anionic oxidant, was applied to the abrasive surface of a grade 220 coated abrasive having an open coat on A weight paper backing. The coating was air dried at ambient room temperature for 0.5 hour. Next a 5% aniline, 10% concentrated hydrochloric acid, and 85% methanol solution was applied over the ammonium persulfate. The aniline polymerized into polyaniline and formed a conductive, doped, conjugated polymer. The surface resistivity was measured in the same manner as the above examples except that the ohmmeter was a Fluke, Model 8020B. The coating weights of the conductive, doped, conjugated polymer and surface resistivity measurements can be found in Table V.

**Table V**

| Example | Coating Weight (gm/sq. meter) | Surface Resistivity (K ohm at 1.3 cm) |
|---|---|---|
| Control G⁷ | -- | >20,000 |
| 15 | 3.1 | 15-100 |

| | | |
|---|---|---|
| ⁷ Control G was a grade 220 open coat A weight paper backed coated abrasive product commercially available from the 3M Company, St. Paul, Minnesota. | | |

It was concluded from the above data that the doped polyaniline coated as a supersize significantly reduced the surface resistivity of the coated abrasive product; thus the conductivity was increased.

### Examples 16-25

Examples 16-25 demonstrate various other embodiments of the invention. The coated abrasive employed in each example was a grade P120 Imperial Resin Bond F weight paper coated abrasive belt, commercially available from 3M Company, St. Paul, MN. The test results can be found in Table VI. The resulting coated abrasive belts were tested on the Wood Belt Test and the surface resistivity was measured. In addition, the total cut, i.e., the amount of wood removed by the coated abrasive, and a measure of the static electricity were also recorded. The static electricity was measured with a hand held static meter placed about 5 cm from the coated abrasive surface. The static meter was obtained from 3M Company, St. Paul, MN, as static meter number 703.

### Example 16

A ferric chloride solution was prepared by mixing 10% anhydrous ferric chloride and 90% ethanol. This solution was then applied to the abrasive side of the coated abrasive. A solution of 10% pyrrole, 20% toluene and 70% hexane was sprayed over the dried ferric chloride coating, which resulted in the polymerization of the pyrrole to form a thin, solid coating of conductive, doped, conjugated polymer. The weight ratio of the two solutions was one to one, with approximately 3.2 grams/square meter of conductive, doped, conjugated polypyrrole being added to the coated abrasive.

### Example 17

The coated abrasive for Example 17 was prepared in the same manner as Example 16 except that an additional coating of a urea-formaldehyde resin was sprayed over the chloride doped polypyrrole. The urea-formaldehyde solution consisted of a 20% solids aqueous solution of Varcuum 4048 urea-formaldehyde resin (diluted from the 65% solids as available from Reichhold Chemical Company) with a 0.5% aluminum chloride catalyst added. The urea-formaldehyde resin was cured in an oven at 70°C for 60 minutes. The coating weight of the urea-formaldehyde resin was 10.5 grams/square meter.

### Example 18

The coated abrasive for Example 18 was prepared in the same manner as Example 16 except that an additional coating of a metal stearate was applied over the chloride doped polypyrrole. The metal stearate was applied as a 23% solids aqueous dispersion, and the dried coating weight was 17.5 grams/square meter.

### Example 19

A ferric chloride solution was prepared by mixing 10% anhydrous ferric chloride and 90% ethanol. This solution was then applied to the abrasive side of the coated abrasive. A solution of 10% bithiophene and 90% toluene was prepared and sprayed over the ferric chloride which resulted in the polymerization of the bithiophene to form a thin, solid coating of a conductive, doped, conjugated polymer. The weight ratio of ferric chloride to bithiophene was one to one, and the coating weight of the doped polythiophene was 4.0 grams/square meter.

### Example 20

The coated abrasive for Example 20 was prepared in the same manner as Example 19, except the ferric chloride was replaced with a ferric p-toluenesulfonate solution, 20% solids solution in ethanol. The weight ratio of ferric p-toluenesulfonate/bithiophene was one to one. The coating weight of the p-toluenesulfonate doped polythiophene was 15.6 grams/square meter.

### Example 21

A 10% pyrrole, 20% toluene and 70% hexane solution was sprayed on the abrasive surface of the coated abrasive. Next, a 20% solids solution of ferric p-toluenesulfonate in ethanol was applied over the pyrrole solution, which resulted in the polymerization of the pyrrole to form a thin, solid coating of a conductive, doped, conjugated polymer. The weight ratio of pyrrole to ferric p-toluenesulfonate was one to one and the coating weight was 6.6 grams/square meter.

### Example 22

The coated abrasive for Example 22 was prepared in the same manner as Example 21 except the ferric p-toluenesulfonate was replaced with ferric dodecylbenzenesulfonate (FDBS) and the FDBS ethanol solution was 25% solids. The weight ratio of FDBS to bithiophene was one to one and the coating weight of the dodecylbenzenesulfonate (DBS) doped polypyrrole was 7.0 grams/square meter.

### Example 23

The coated abrasive for Example 23 was prepared in the same manner as Example 22 except that an additional coating of a urea-formaldehyde resin was sprayed over the DBS doped polypyrrole. The urea-formaldehyde solution consisted of 20% urea-formaldehyde solids in aqueous solution (obtained by diluting Varcuum 4048 available from Reichhold Chemical Company) and adding 0.5% by"weight aluminum chloride catalyst. The urea-formaldehyde resin was cured in an oven at 70°C for 60 minutes. The coating weight of the urea-formaldehyde resin was 9.5 grams/square meter.

### Example 24

The coated abrasive for Example 24 was prepared in the same manner as Example 22 except that an additional coating of a metal stearate solution was applied over the DBS doped polypyrrole. The metal stearate aqueous dispersion was 23% solids and the coating weight was 10.3 grams/square meter.

### Example 25

An aniline solution that consisted of 5% aniline, 10% concentrated hydrochloric acid and 85% methanol was sprayed on the abrasive side of the coated abrasive. Then an ammonium persulfate solution that consisted of 10% ammonium persulfate, 90% water and 0.5% wetting agent, FC-170 commercially available from the 3M Company, was sprayed over the aniline coating. This resulted in the polymerization of the aniline to form a thin, solid coating of a conductive, doped, conjugated polymer. The weight ratio of aniline to ammonium persulfate was one to one and the coating weight of the sulfate doped polyaniline was 9.9 grams/square meter.

**TABLE VI**

| Example Number | Resistivity (K ohm at 1.3 cm) | Cut (grams) | Static Meter Reading (volts) |
|---|---|---|---|
| 16 | <20 | 580 | -4080 |
| 17 | <35 | 600 | -4290 |
| 18 | <35 | 715 | -1167 |
| 19 | <45 | 562 | -3687 |
| 20 | <30 | 615 | -4375 |
| 21 | <10 | 584 | -4500 |
| 22 | <30 | 537 | <-5000 |
| 23 | <30 | 560 | -3270 |
| 24 | <25 | 602 | -4460 |
| 25 | <10 | 660 | -2834 |
| Control | >20,000 | 627 | +2500 |

The control was grade P120 Imperial Resin Bond F weight paper coated abrasive belt, commercially available from 3M Company, St. Paul, MN.

## Claims

1. An abrasive article comprising:
(a) a support member;
(b) abrasive granules;
(c) a bond system which serves to secure the abrasive granules to the support member in an abrasive coating having an abrasive surface;
d) a conductive layer over said abrasive surface in an amount sufficient to reduce static electrical charge resulting from abrading operations;
characterized in that the conductive layer consists of a conductive, doped,conjugated polymer.

2. The abrasive article according to claim 1, further characterized by said conductive, doped, conjugated polymer being selected from polythiophene, polyaniline, polypyrrole, polyacetylene, poly(p-phenylene), poly(p-phenylenevinylene), poly(p-phenylene sulfide), polyfuran, polycarbazole, polyisothianaphthene, polyquinoline, polyazulene, polyisoindole, copolymers, mixtures and substituted versions thereof.

3. The abrasive article according to claim 1, further characterized by said conjugated polymer being polypyrrole, polyaniline or substituted versions and copolymers thereof.

4. The abrasive article according to any preceding claim further characterized by said doped, conjugated polymer being doped with a dopant selected from bisulfate, sulfate, perchlorate, fluoroborate, hexafluorophosphate, hexafluoroantimonate, hexafluoroarsenate, trifluoroacetate, organic sulfonates, halides, and ferric tetrachloride.

5. The abrasive article according to any one of preceding claims 1-3, further characterized by said doped, conjugated polymer being doped with a dopant selected from chloride, ferric tetrachloride, sulfate and p-toluene sulfonate.

6. The abrasive article of any preceding claim further characterized by said support member being a sheet and said abrasive article is a coated abrasive article.

7. The abrasive article of any preceding claim further characterized by said conductive, doped, conjugated polymer layer being the outermost layer.

8. The abrasive article of any preceding claim further characterized by said conductive, doped, conjugated polymer layer being beneath a free coating layer.

9. The abrasive article of claim 8 further characterized by said free coating layer being a layer of a material selected from of ureaformaldehyde resins, melamine-formaldehyde resins, phenolic resins, epoxy resins, and metal stearate.

10. The abrasive article of claim 9 further characterized by said free coating comprising a metal stearate.

## Patentansprüche

1. Schleifmittel, umfassend:
(a) einen Träger;
(b) Schleifkörnchen;
(c) eine Bindungssystem, das dazu dient, die Schleifkörnchen in einer Schleifschicht mit einer Schleifoberfläche an dem Träger zu befestigen;
(d) eine leitfähige Schicht über der Schleifoberfläche in einer Menge, die ausreicht, die beim Schleifen entstehende elektrostatische Ladung zu reduzieren;
dadurch gekennzeichnet, daß die leitfähige Schicht aus einem leitfähigen, dotierten, konjugierten Polymer besteht.

2. Schleifmittel nach Anspruch 1, des weiteren dadurch gekennzeichnet, daß das leitfähige, dotierte, konjugierte Polymer ausgewählt ist aus Polythiophen, Polyanilin, Polypyrrol, Polyacetylen, Poly(p-phenylen), Poly(p-phenylenvinylen), Poly(p-phenylensulfid), Polyfuran, Polycarbazol, Polyisothianaphthen, Polychinolin, Polyazulen, Polyisoindol, Copolymeren, Mischungen und substituierten Versionen derselben.

3. Schleifmittel nach Anspruch 1, des weiteren dadurch gekennzeichnet, daß es sich bei dem konjugierten Polymer um Polypyrrol, Polyanilin oder substituierte Versionen und Copolymere desselben handelt.

4. Schleifmittel nach einem der vorhergehenden Ansprüche, des weiteren dadurch gekennzeichnet, daß das dotierte, konjugierte Polymer mit einem Dotierungsmittel dotiert ist, das ausgewählt ist aus Bisulfat, Sulfat, Perchlorat, Fluorborat, Hexafluorphosphat, Hexafluorantimonat, Hexafluorarsenat, Trifluoracetat, organischen Sulfonaten, Halogeniden und Eisen(IV)-chlorid.

5. Schleifmittel nach einem der vorhergehenden Ansprüche 1-3, des weiteren dadurch gekennzeichnet, daß das dotierte, konjugierte Polymer mit einem Dotierungsmittel dotiert ist, das ausgewählt ist aus Chlorid, Eisen(IV)-chlorid, Sulfat und p-Toluolsulfonat.

6. Schleifmittel nach einem der vorhergehenden Ansprüche, des weiteren dadurch gekennzeichnet, daß der Träger eine Folie ist, und das Schleifmittel ein beschichtetes Schleifmittel ist.

7. Schleifmittel nach einem der vorhergehenden Ansprüche, des weiteren dadurch gekennzeichnet, daß die leitfähige, dotierte, konjugierte Polymerschicht die äußerste Schicht ist.

8. Schleifmittel nach einem der vorhergehenden Ansprüche, des weiteren dadurch gekennzeichnet, daß die leitfähige, dotierte, konjugierte Polymerschicht unter einer freien Deckschicht liegt.

9. Schleifmittel nach Anspruch 8, des weiteren dadurch gekennzeichnet, daß die freie Deckschicht eine Schicht aus einem Material ist, das ausgewählt ist aus Harnstoff-Formaldehydharzen, Melamin-Formaldehydharzen, Phenolharzen, Epoxidharzen und Metallstearat.

10. Schleifmittel nach Anspruch 9, des weiteren dadurch gekennzeichnet, daß die freie Deckschicht ein Metallstearat enthält.

## Revendications

1. Article abrasif comprenant :
(a) un élément de support ;
(b) des granules abrasifs ;
(c) un système de collage qui sert à fixer les granules abrasifs sur l'élément de support dans un revêtement abrasif ayant une surface abrasive ; et
(d) une couche conductrice sur ladite surface abrasive, en quantité suffisante pour diminuer la charge d'électricité statique qui résulte des opérations d'abrasion ;
caractérisé en ce que la couche conductrice est constituée d'un polymère conducteur, dopé, conjugue.

2. Article abrasif selon la revendication 1, caractérisé en outre en ce que ledit polymère conducteur, dopé, conjugué est choisi dans l'ensemble constitué par le polythiophène, la polyaniline, le polypyrrole, le polyacétylène, le poly(p-phénylène), le poly(p-phénylènevinylène), le poly(sulfure de p-phénylène), le polyfuranne, le polycarbazole, le polyisothianapthène, la polyquinoléine, le polyazulène, le polyiso-indole, et des copolymères, des mélanges et des variantes substituées de ceux-ci.

3. Article abrasif selon la revendication 1, caractérisé en outre en ce que ledit polymère conjugué est le polypyrrole, la polyaniline ou des variantes susbtituées ou des copolymères de ceux-ci.

4. Article abrasif selon l'une quelconque des revendications précédentes, caractérisé en outre en ce que ledit polymère conjugué dopé est dopé avec un dopant choisi dans l'ensemble constitué par les bisulfates, les sulfates, les perchlorates, les fluoroborates, les hexafluorophosphates, les hexafluoroantimonates, les hexafluoroarsénates, les trifluoroacétates, les sulfonates organiques, les halogénures et le tétrachlorure ferrique.

5. Article abrasif selon l'une quelconque des revendications 1 à 3 précédentes, caractérisé en outre en ce que ledit polymère conjugué dopé est dopé avec un dopant choisi dans l'ensemble constitué par les chlorures, le tétrachlorure ferrique, les sulfates et le sulfonate de p-toluène.

6. Article abrasif selon l'une quelconque des revendications précédentes, caractérisé en outre en ce que ledit élément de support est une feuille, et lesdites particules abrasives sont formées d'un article abrasif revêtu.

7. Article abrasif selon l'une quelconque des revendications précédentes, caractérisé en outre en ce que ladite couche de polymère conjugué dopé conducteur est la couche située le plus extérieur.

8. Article abrasif selon l'une quelconque des revendications précédentes, caractérisé en outre en ce que ladite couche de polymère conjugué dopé conducteur est située au-dessous d'une couche sans revêtement.

9. Article abrasif selon la revendication 8, caractérisé en outre en ce que ladite couche sans revêtement est une couche formée d'un matériau choisi dans l'ensemble constitué par des résines d'urée-formaldéhyde, des résines de mélamine-formaldéhyde, des résines phénoliques, des résines époxy et des stéarates de métal.

10. Article abrasif selon la revendication 9, caractérisé en outre en ce que ladite couche sans revêtement est constituée par un stéarate de métal.
